# EUROPEAN PATENT SPECIFICATION

(11) **EP 3 318 753 B1**
(45) Date of publication and mention of the grant of the patent: **31.10.2018**
(21) Application number: 17160590.0
(22) Date of filing: 13.03.2017
(51) Int. Cl.: F03D 9/28, F03D 15/00, F03D 13/10, F03D 80/70, F04B 17/02, F04B 1/053

(54) **RENEWABLE-ENERGY TYPE POWER GENERATING APPARATUS AND METHOD OF ASSEMBLING THE SAME**
VORRICHTUNG ZUR STROMERZEUGUNG AUS ERNEUERBARER ENERGIE UND MONTAGEVERFAHREN DAFÜR
APPAREIL DE PRODUCTION DE PUISSANCE DE TYPE À ÉNERGIE RENOUVELABLE ET PROCÉDÉ D'ASSEMBLAGE CORRESPONDANT

(30) Priority: 04.11.2016 JP 2016216136
(43) Date of publication of application: 09.05.2018
(73) Proprietor: Mitsubishi Heavy Industries, Ltd., Tokyo 108-8215 (JP)
(72) Inventor: KAWABATA, Shinji, Tokyo, 108-8215 (JP); NOGUCHI, Toshihide, Tokyo, 108-8215 (JP)
(74) Representative: Henkel, Breuer & Partner

(56) References cited:
- JP-B2- 5 836 478
- US-A1- 2012 047 886
- US-A1- 2012 060 685
- US-A1- 2012 063 929

## Description

### TECHNICAL FIELD

The present invention relates to a renewable-energy type power generating apparatus which generates electric power from renewable energy and a method of assembling the same. A renewable-energy type power generating apparatus is a power generating apparatus utilizing renewable energy such as wind, tidal current, ocean current, and river current. For instance, it may be a wind turbine power generating apparatus, a tidal current power generating apparatus, an ocean current power generating apparatus, or a river current power generating apparatus.

### BACKGROUND ART

In recent years, from the perspective of preserving the global environment, renewable-energy type power generating apparatuses such as a wind turbine power generating apparatus utilizing wind power and a power generating apparatus utilizing tidal current, river current, or ocean current have become widely used. A renewable-energy type power generating apparatus converts kinetic energy of wind, tidal current, ocean current, or river current into rotational energy of a rotor, and further converts the rotational energy of the rotor into electric power with a generator.

A known example of such a renewable-energy type power generating apparatus is equipped with a hydraulic transmission combining a hydraulic pump driven by rotation of a rotor and a hydraulic motor connected to a generator. In a wind turbine power generating apparatus provided with a hydraulic transmission, for instance, a main shaft is supported rotatably by a dedicated main bearing inside a nacelle, and an end (front end) of the main shaft is coupled to a hub of a wind turbine rotor which includes a plurality of blades and the hub supporting the blades.

Furthermore, a rotor of a hydraulic pump is mounted to the other end (rear end) of the main shaft so as to be rotatable with the main shaft. The rotor of the hydraulic pump is supported in a cantilever state, or supported rotatably by a dedicated rotor bearing for the rotor of the hydraulic pump, for instance. Pressurized oil produced by the hydraulic pump is sent to a hydraulic motor through a high-pressure oil line from the rear end side of the pump, and drives the hydraulic motor, which drives a generator.

Such a renewable-energy type power generating apparatus tends to increase in size in order to improve power generation efficiency, so that the diameter of the main shaft and the size of the hydraulic pump also increase, and a large torque is transmitted from the main shaft to the hydraulic pump. On the other hand, an increase in the size and weight of a nacelle itself should be suppressed to save production costs, for instance, and it is also desirable to suppress size increase or reduce the size of the nacelle in the axial direction of the main shaft.

In view of the above, for instance, US 2010/0032959 A discloses a wind turbine power generating apparatus provided with a hydraulic transmission, including a hydraulic pump mounted around a main shaft in the vicinity of a hub, as an example of a structure for mounting a hydraulic pump to a rotor.
Further, WO 2014/097428 A discloses a configuration in which a rotor part of a hydraulic pump is disposed opposite from a nacelle across a hub and fixed to the hub. WO 2014/097427 A discloses a configuration in which a hydraulic pump is disposed in front of the rotational center axis of a yaw rotation bearing of a nacelle, which is the turbine side, and between the rotational center axis and the hub.
Further, as a configuration example for transmitting a great torque to a hydraulic pump from a main shaft, JP 5615349 B discloses a configuration using a key coupling and JP 4969708 B discloses a configuration using a spline coupling.

While a main bearing for pivotally supporting a main shaft is normally required to function for a long period of time, inputs from a renewable energy source to the main shaft change constantly and thus complex loads including a bending load are applied to the main shaft. If the main shaft is supported on the nacelle side by a pair of bearings under such harsh conditions, complex loads applied to the main shaft may deform the structure around each bearing, causing misalignment of the center of each bearing. If the center of each bearing becomes misaligned, the bearings receive load components in unexpected directions, which may reduce the lifetime of the bearings radically. Thus, it is necessary to reinforce the main bearings or to reduce loads applied to the main bearings. JP 5836478 B discloses a support structure for bearings provided with a bearing casing to maintain a concentric state of a pair of bearings.

US 2012/0060685 A1 discloses a renewable-energy type power generating apparatus which does not have a yaw rotation mechanism and comprises a wind turbine rotor connected to a turbine shaft, a hydraulic pump with a pump drive shaft independent from but connected to the turbine shaft to rotate along with the turbine shaft, a nacelle housing the hydraulic pump, and a tower supporting the nacelle. The pump drive shaft of the hydraulic pump is supported by a pair of dedicated pump bearings and is attached to the turbine shaft of the wind turbine rotor, wherein the turbine shaft is supported by its own dedicated main shaft bearing.

US 2012/00633929 A1 discloses a wind turbine which does not have a yaw rotation mechanism. A hydraulic pump is located off-centered from a central vertical axis of the tower. A pair of bearings for supporting a main rotor shaft are provided as dedicated bearings for the main rotor shaft and a further pair of bearings are provided as dedicated bearings for supporting a rotor part of the hydraulic pump.

### SUMMARY

Meanwhile, if a nacelle is supported yaw-rotatably to the tower at an upper part of the tower, it is desirable to set the gravity center of structural components inside the nacelle in the vicinity of the center axis of yaw rotation, which is the rotational center axis of the yaw rotation bearing. In particular, a hydraulic pump which increases at least in weight in accordance with size increase is desirable to be disposed on the center axis of yaw rotation inside the nacelle. Such a configuration is important in designing a renewable-energy type power generating apparatus which can operate stably for a long period of time, while taking account of influences from various forces applied to a tower due to the weight of the wind turbine rotor, wind loads, oscillation, and the like. Such a configuration is also desirable in terms of prevention of unexpected behavior of various components.

However, it may be difficult to position a hydraulic pump on the center axis of yaw rotation within the nacelle without sacrificing the assembling performance and the maintainability.

In this context, none of the renewable-energy type power generating apparatuses disclosed in the above mentioned Patent Documents has a hydraulic pump disposed on the rotational center axis of the yaw-rotation bearing, which makes the arrangement not necessarily ideal in particular for a renewable-energy type power generating apparatus of a great size.

In view of the above, an object of at least one embodiment of the present invention is to provide a renewable-energy type power generating apparatus whereby it is possible to reduce the weight of a nacelle and to improve assembling performance.
(1) A renewable-energy type power generating apparatus according to the present invention comprises the features of claim 1 including: a wind turbine rotor; a main shaft coupled to the wind turbine rotor; a hydraulic pump including a stator part, and a rotor part provided to be rotatable relative to the stator part and configured to rotate along with the main shaft; a nacelle housing at least the hydraulic pump; a tower supporting the nacelle; a yaw rotation bearing rotatably supporting a nacelle base plate of the nacelle on the tower; a support part supporting the stator part on the nacelle base plate; and a pair of bearings disposed between the stator part and the main shaft or the rotor part, and configured to support the main shaft rotatably on the nacelle base plate via the stator part and the support part. The pair of bearings are disposed in front and rear across a center axis of the yaw rotation bearing in an axial direction of the main shaft. The hydraulic pump is disposed from front to rear across the center axis of the yaw rotation bearing in the axial direction.

With this configuration, a pair of bearings supporting the main shaft is disposed in front and rear across the center axis of the yaw rotation bearing in the axial direction of the main shaft, while the hydraulic pump is disposed from front to rear across the center axis of the yaw rotation bearing in the axial direction of the main shaft. Thus, at least the hydraulic pump having a large weight is disposed on the center axis of yaw rotation inside the nacelle. Thus, it is unnecessary to position the hydraulic pump behind the center axis of the yaw rotation bearing in the axial direction of the main shaft, which makes it possible to suppress or reduce an increase in the size of the nacelle in the axial direction, and/or the weight of the nacelle.

Furthermore, the rotor part of the hydraulic pump may be directly mounted to the main shaft, for instance, in case of which it is unnecessary to provide a dedicated rotor bearing for pivotally supporting the rotor part of the hydraulic pump. In other words, it is possible to pivotally support the main shaft and the rotor part of the hydraulic pump with the pair of bearings; or the pair of bearings function as bearings for the main shaft and also as bearings for the rotor part of the hydraulic pump; or it is possible to provide common bearings for pivotally supporting the rotor part of the hydraulic pump and for supporting the main shaft. Thus, as compared to a typical renewable-energy type power generating apparatus which requires a rotor bearing for the hydraulic pump provided separately from a bearing for the main shaft, it is possible to reduce at least a weight corresponding to a rotor bearing, which makes it possible to suppress weight increase of the nacelle or to reduce weight of the nacelle.
(2) In some embodiments, in the renewable-energy type power generating apparatus described in the above (1), the stator part is disposed on a radially outer side of the rotor part. The support part is disposed above the nacelle base plate, and is configured to support at least one of a front end portion or a rear end portion of the stator part in the axial direction.
   With this configuration, the same effect as that of the renewable-energy type power generating apparatus described in the above (1) can be achieved, and in addition, the support part supports at least one of a front end portion or a rear end portion of the stator part in the axial direction, the stator part being disposed outside the rotor part in the radial direction. Thus, loads input to the pair of bearings supporting the main shaft are transmitted to the nacelle or the tower via the stator part, the support part, the nacelle base plate, and the yaw rotation bearing. Accordingly, the nacelle or the tower can support the complex loads applied to the pair of bearings, and thus it is possible to reinforce the pair of bearings or to reduce loads applied to the pair of bearings, and to keep the pair of bearings functional for a long period of time.
(3) In some embodiments, in the renewable-energy type power generating apparatus described in the above (1) or (2), the rotor part includes a ring cam to be mounted to an outer peripheral surface of the main shaft between the pair of bearings in the axial direction. The stator part includes: a cylinder block disposed on a radially outer side of the ring cam so as to face the ring cam; and a piston configured to reciprocate, by the ring cam, inside a cylinder formed in the cylinder block.
   With this configuration, the same effect as that of the renewable-energy type power generating apparatus described in the above (1) or (2) can be achieved, and in addition, the ring cam mounted to the outer peripheral surface of the main shaft functions as the rotor part of the hydraulic pump. That is, the ring cam rotates with the main shaft, and the pistons disposed so as to face the ring cam at the radially outer side of the ring cam reciprocate inside the cylinders in accordance with the cam surface of the ring cam and thereby produce pressurized oil.
(4) In some embodiments, in the renewable-energy type power generating apparatus described in the above (3), the stator part includes a pair of bearing-fixing parts to which the pair of bearings are to be mounted respectively. The cylinder block is disposed so as to be interposed between the pair of bearing-fixing parts in the axial direction.
   With this configuration, the same effect as that of the renewable-energy type power generating apparatus described in the above (3) can be achieved, and in addition, the cylinder block is disposed so as to be interposed, at the front and rear of the cylinder block, between the pair of bearing-fixing parts of the stator part in the axial direction from front and rear in the axial direction. Thus, it is possible to support the cylinder block suitably at front and rear with respect to the axial direction.
(5) In some embodiments, in the renewable-energy type power generating apparatus described in the above (3) or (4), the rotor part includes: a pair of small-diameter portions to which the pair of bearings are mounted; and a large-diameter portion which is disposed between the pair of small-diameter portions in the axial direction, and to which the ring cam is mounted.
   With this configuration, the same effect as that of the renewable-energy type power generating apparatus described in the above (3) or (4) can be achieved, and in addition, the rotor part includes small-diameter portions to which the pair of bearings are mounted and a large-diameter portion which has a diameter greater than that of the small-diameter portions and to which the ring cam is mounted. Thus, it is possible to reduce the weight related to bearings including the pair of bearings and to increase the diameter of the ring cam and of the cylinder block disposed to face the ring cam at the radially outer side of the ring cam, which makes it possible to provide a larger number of cylinders in the circumferential direction of the hydraulic pump. Accordingly, it is possible to provide a structure suitable to increase a pump output accompanying an improved power generation efficiency, while suppressing a weight increase of the nacelle.
(6) In some embodiments, in the renewable-energy type power generating apparatus described in any one of the above (1) to (5), the main shaft and the rotor part are coupled by at least one of: a flange coupling; a coupling via a coating sheet containing a diamond powder; a key coupling; or a spline coupling.
   With this configuration, the same effect as that of the renewable-energy type power generating apparatus described in the above (1) to (5) can be achieved, and in addition, the main shaft and the rotor part are coupled by at least one of a flange coupling, a coupling via a coating sheet containing a diamond powder, a key coupling, or a spline coupling, which makes it possible to transmit a great torque reliably from the main shaft to the rotor part.
(7) A method of assembling a renewable-energy type power generating apparatus according to the present invention comprises the features of claim 7 and is for a renewable-energy type
   power generating apparatus comprising: a wind turbine rotor; a main shaft coupled to the wind turbine rotor; a hydraulic pump including a stator part, and a rotor part provided to be rotatable relative to the stator part and configured to rotate along with the main shaft; a nacelle housing at least the hydraulic pump; a tower supporting the nacelle; and a yaw rotation bearing rotatably supporting a nacelle base plate of the nacelle on the tower, and the method comprises: a step of assembling the main shaft and/or the rotor part; a step of mounting a pair of bearings in front and rear across a center axis of the yaw rotation bearing of the renewable-energy type power generating apparatus in an axial direction of the main shaft; a step of mounting the main shaft or the rotor part to the stator part via the pair of bearings; and a step of supporting the nacelle base plate on the stator part. The hydraulic pump is disposed from front to rear across the center axis of the yaw rotation bearing in the axial direction.

With this configuration, a pair of bearings supporting the main shaft is disposed in front and rear across the center axis of the yaw rotation bearing in the axial direction of the main shaft, while the hydraulic pump is disposed from front to rear across the center axis of the yaw rotation bearing in the axial direction of the main shaft. Thus, at least the hydraulic pump having a large weight is disposed on the center axis of yaw rotation inside the nacelle. Thus, it is unnecessary to position the hydraulic pump behind the center axis of the yaw rotation bearing in the axial direction of the main shaft, which makes it possible to suppress or reduce an increase in the size of the nacelle in the axial direction, and/or the weight of the nacelle.

Furthermore, the rotor part of the hydraulic pump may be directly mounted to the main shaft, for instance, in case of which it is unnecessary to provide a dedicated rotor bearing for pivotally supporting the rotor part of the hydraulic pump. In other words, it is possible to pivotally support the main shaft and the rotor part of the hydraulic pump with the pair of bearings; or the pair of bearings function as bearings for the main shaft and also as bearings for the rotor part of the hydraulic pump; or it is possible to provide common bearings for pivotally supporting the rotor part of the hydraulic pump and for supporting the main shaft. Thus, as compared to a typical renewable-energy type power generating apparatus which requires a rotor bearing for the hydraulic pump provided separately from a bearing for the main shaft, it is possible to reduce at least a weight corresponding to a rotor bearing, which makes it possible to suppress weight increase of the nacelle or to reduce weight of the nacelle.

In the assembling method described in the above (7), the order to perform the steps is not limited.
(8) In some embodiments, in the method of assembling a renewable-energy type power generating apparatus described in the above (7), the step of assembling the main shaft includes assembling the main shaft as a rotor of the hydraulic pump. The step of mounting the pair of bearings includes mounting the pair of bearings to an outer peripheral surface of the main shaft at both sides of the main shaft in the axial direction.
   With this configuration, the same effect as that of the method of assembling a renewable-energy type power generating apparatus in the above (7) can be achieved, and in addition, the main shaft functions as the rotor part of the hydraulic pump, and thus it is unnecessary to provide a separate member corresponding to the rotor part, at least for a section of the rotor part of the hydraulic pump where the main shaft functions as a rotor part of the hydraulic pump. Thus, it is possible to reduce the corresponding weight, and to reduce the weight of the nacelle. Further, it is unnecessary to mount a bearing for the hydraulic pump separately from the pair of bearings, and thus the assembling performance and maintainability are improved as compared to a typical method of assembling a renewable-energy type power generating apparatus which requires mounting other bearings. Further, it is unnecessary to have the hydraulic pump assembled in advance, which improves the flexibility of assembly to adjust to different situations, and thus the assembling performance improves.
(9) In some embodiments, in the method of assembling a renewable-energy type power generating apparatus described in the above (7) or (8), the stator part includes a pair of bearing-fixing parts to which the pair of bearings are to be mounted, respectively. The pair of bearings and the pair of bearing-fixing parts are mounted from a rear end side of the main shaft.
   With this configuration, the same effect as that of the method of assembling a renewable-energy type power generating apparatus in the above (7) or (8) can be achieved, and in addition, the pair of bearings and the pair of bearing-fixing parts are mounted from the rear end side of the main shaft. Specifically, with regard to the pair of bearings and the pair of bearing-fixing parts, the bearing in front in the axial direction is mounted from the rear end side of the main shaft toward the front, the bearing-fixing part in front in the axial direction is mounted from the rear end side of the main shaft toward the front, the bearing-fixing part in rear in the axial direction is mounted from the rear end side of the main shaft toward the front, and the bearing in rear in the axial direction is mounted from the rear end side of the main shaft toward the front.
(10) In some embodiments, in the method of assembling a renewable-energy type power generating apparatus described in the above (9), the stator part includes a cylinder block comprising a plurality of segments disposed in a circumferential direction of the hydraulic pump. The method further comprises forming the cylinder block by mounting each of the plurality of segments to a position between the pair of bearing-fixing parts in the axial direction after mounting the pair of bearings and the pair of bearing-fixing parts to the main shaft.
   With this configuration, the same effect as that of the method of assembling a renewable-energy type power generating apparatus in the above (9) can be achieved, and in addition, the plurality of segments for forming the cylinder block are mounted to a position between the pair of bearing-fixing parts in the axial direction after mounting the pair of bearings and the pair of bearing-fixing parts to the main shaft. Thus, it is possible to determine the position of the cylinder block readily when mounting the cylinder block. Further, it is possible to mount the cylinder block in a state divided into the plurality of segments, which facilitates the assembly works. Furthermore, for instance, if a crane or the like for transportation is disposed inside the nacelle, the segments can be efficiently mounted and disassembly and removal can be facilitated by setting the size of each segment to a size movable by the crane, and thereby the maintainability improves.
(11) In some embodiments, in the method of assembling a renewable-energy type power generating apparatus described in the above (7), the step of assembling the main shaft and/or the rotor part includes coupling the rotor part of the hydraulic pump to the main shaft, the hydraulic pump being assembled in advance.
   With this configuration, the same effect as that of the method of assembling a renewable-energy type power generating apparatus in the above (7) can be achieved, and in addition, it is possible to couple the rotor part of the hydraulic pump, which is assembled in advance, to the main shaft, and thus it is possible to assemble the hydraulic pump somewhere other than an installation site before carrying the hydraulic pump into the site. Thus, it is possible to facilitate the assembling works of the renewable-energy type power generating apparatus at the site. The main shaft and the rotor part can be coupled to each other by a variety of methods, which improves the assembling performance and the design flexibility.
(12) In some embodiments, in the method of assembling a renewable-energy type power generating apparatus described in the above (11), the step of assembling the main shaft and/or the rotor part includes coupling the rotor part of the hydraulic pump to a rear end portion of the main shaft, the hydraulic pump being assembled in advance.
   With this configuration, the same effect as that of the method of assembling a renewable-energy type power generating apparatus in the above (11) can be achieved, and in addition, the rotor part of the pre-assembled hydraulic pump is coupled to the rear end portion of the main shaft, and thus the rear end portion of the main shaft is supported rotatably relative to the stator part to which the rotor part is mounted, via a pair of bearings. Further, the rotor part mounted to the rear end portion of the main shaft is a part of the hydraulic pump disposed on the center axis of yaw rotation inside the nacelle, and thus a smaller space is required at the rear side in the axial direction of the main shaft during assembly and maintenance, which improves the assembling performance and maintainability while suppressing the weight of the nacelle.
(13) In some embodiments, in the method of assembling a renewable-energy type power generating apparatus described in any one of the above (7), (11), and (12), the step of assembling the main shaft and/or the rotor part includes coupling the main shaft and the rotor part by a flange coupling or a coupling via a coating sheet containing a diamond powder.
   With this configuration, the same effect as that of the method of assembling a renewable-energy type power generating apparatus described in the above (7), (11) and (12) can be achieved, and in addition, the main shaft and the rotor part are coupled by at least one of a flange coupling or a coupling via a coating sheet containing a diamond powder, which makes it possible to transmit a great torque reliably from the main shaft to the rotor part.
(14) In some embodiments, in the method of assembling a renewable-energy type power generating apparatus described in the above (11), the step of assembling the main shaft and/or the rotor part includes mounting the hydraulic pump from a rear end side of the main shaft so as to engage the rotor part of the hydraulic pump with an outer peripheral side of the main shaft, the hydraulic pump being assembled in advance.
   With this configuration, the same effect as that of the method of assembling a renewable-energy type power generating apparatus in the above (11) can be achieved, and in addition, it is possible to couple the rotor part of the hydraulic pump from the rear end side of the main shaft so that the rotor part of the pre-assembled hydraulic pump is engaged with the outer peripheral side of the main shaft. For instance, the rotor part of the hydraulic pump is assembled into an outer cylindrical shape so as to be inserted onto the outer periphery of the main shaft, and then slided from the rear end side of the main shaft to be engaged with the main shaft.
(15) In some embodiments, in the method of assembling a renewable-energy type power generating apparatus described in any one of the above (7), (11), and (14), the step of assembling the main shaft and/or the rotor part includes coupling the main shaft and the rotor part by a key coupling or a spline coupling.

With this configuration, the same effect as that of the method of assembling a renewable-energy type power generating apparatus described in the above (7), (11) and (14) can be achieved, and in addition, the main shaft and the rotor part are coupled by at least one of a key coupling or a spline coupling, which makes it possible to transmit a great torque reliably from the main shaft to the rotor part.

According to at least one embodiment of the present invention, it is possible to provide a renewable-energy type power generating apparatus with a reduced nacelle weight and an improved assembling performance. Further, according to at least one embodiment of the present invention, it is possible to provide a method of assembling a renewable-energy type power generating apparatus with an improved assembling performance.

### BRIEF DESCRIPTION OF DRAWINGS

FIG. 1 is a schematic overall diagram of a wind turbine power generating apparatus according some embodiments.
FIG. 2 is a cross-sectional view of a configuration example of a hydraulic pump according to the first embodiment.
FIG. 3 is a partial cross-sectional view of a configuration example of a hydraulic pump according to some embodiments.
FIG. 4 is a flow chart of a method of assembling a wind turbine power generating apparatus according some embodiments.
FIG. 5 is a cross-sectional view of a configuration example of a wind turbine power generating apparatus according to the second embodiment.
FIG. 6 is a cross-sectional view of a configuration example of a wind turbine power generating apparatus according to the second embodiment.
FIG. 7 is a cross-sectional view of a configuration example of a wind turbine power generating apparatus according to the second embodiment.
FIG. 8 is a partial cross-sectional view of a wind turbine power generating apparatus according to the second embodiment.

### DETAILED DESCRIPTION

Embodiments of the present invention will now be described with reference to the accompanying drawings. It is intended, however, that unless particularly specified, dimensions, materials, shapes, relative positions and the like of components described in the embodiments shall be interpreted as illustrative only and not intended to limit the scope of the present invention unless particularly specified.

In the following embodiment, a wind turbine power generating apparatus will be described as an example of a renewable-energy type power generating apparatus. However, the present invention can be applied to other renewable-energy type power generating apparatuses such as a tidal current power generating apparatus, an ocean current power generating apparatus, and a river current power generating apparatus.

### (First embodiment)

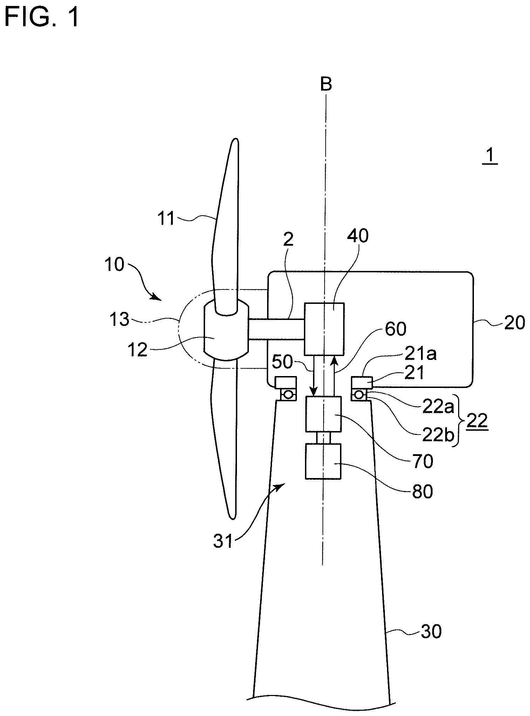

FIG. 1 is a diagram of a wind turbine power generating apparatus according to some embodiments.

As depicted in the drawing, the wind turbine power generating apparatus 1 includes a rotor 10 (wind turbine rotor) including at least one blade 11 and a hub 12, a main shaft 2 coupled to the rotor 10, a hydraulic pump 40 including a stator part 41 and a pump shaft 42c serving as a rotor part disposed rotatably to the stator part 41 and configured to rotate along with the main shaft 2, the nacelle 20 housing at least the hydraulic pump 40, a tower 30 supporting the nacelle 20, a yaw rotation bearing 22 rotatably supporting a nacelle base plate 21 of the nacelle 20 to the tower 30, a support part 48 supporting the stator part 41 to the nacelle base plate 21, and a pair of bearings 49a, 49b disposed between the stator part 41 and the main shaft 2 or the rotor part, supporting the main shaft 2 rotatably to the nacelle base plate 21 via the stator part 41 and the support part 48. The hub 12 may be covered with a hub cover 13.

In some embodiments, the main shaft is coupled to the hydraulic pump 40, and the hydraulic pump 40 is coupled to the rotor 10 via the main shaft 2. A hydraulic motor 70 is connected to the hydraulic pump 40 via a high-pressure line 50 and a low-pressure line 60. Specifically, an outlet of the hydraulic pump 40 is connected to an inlet of the hydraulic motor 70 via the high-pressure line 50, and an inlet of the hydraulic pump 40 is connected to an outlet of the hydraulic motor 70 via the low-pressure line 60.

The hydraulic pump 40 is driven by the main shaft 2 to pressurize the working oil, thereby producing high-pressure working oil (pressurized oil). The pressurized oil produced by the hydraulic pump 40 is supplied to the hydraulic motor 70 via the high-pressure line 50, and drives the hydraulic motor 70. The low-pressure working oil having performed work in the hydraulic motor 70 is returned again to the hydraulic pump 40 via the low-pressure line 60 disposed between the outlet of the hydraulic motor 70 and the inlet of the hydraulic pump 40.

The generator 80 is coupled to the hydraulic motor 70. In some embodiments, the generator 80 is a synchronous generator connected to a utility grid and driven by the hydraulic motor 70.

At least a part of the main shaft 2 is covered with a nacelle 20 disposed on the tower 30. In some embodiments, at least the hydraulic pump 40 is housed inside the nacelle 20, and the hydraulic motor 70 and the generator 80 are disposed inside the upper space 31 inside the tower 30. Further, the hydraulic motor 70 is disposed on the center axis B of the yaw rotation bearing 22 that rotatably supports the nacelle 20 on the tower 30.

In some embodiments, at least one of the above described hydraulic pump 40 or the hydraulic motor 70 is a radial-piston type hydraulic machine described below.

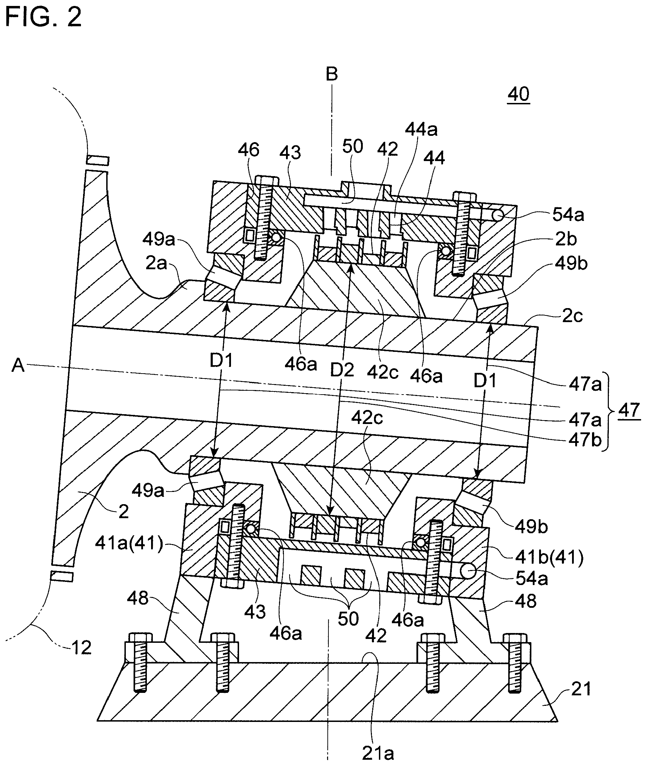

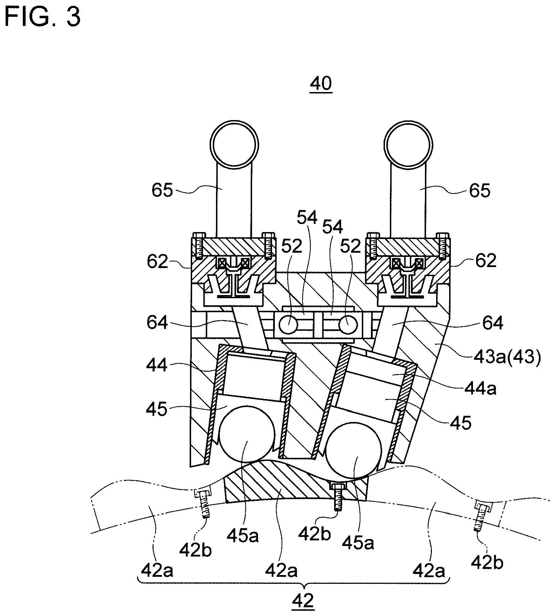

FIG. 2 is a schematic vertical cross-sectional view of the hydraulic pump 40 of a wind turbine power generating apparatus according to some embodiments, taken along the axial direction. FIG. 3 is a schematic partial diagram showing a transverse cross section of the hydraulic pump 40 in FIG. 2, taken along a direction orthogonal to the axial direction.

In the embodiment depicted in FIG. 2, the hydraulic pump 40 includes the stator part 41, the pump shaft 42c serving as a rotor part disposed rotatably to the stator part 41 and configured to rotate with the main shaft 2, a plurality of pistons 45 disposed along the radial direction of the pump shaft 42c, a cylinder block 43 including a plurality of cylinders 44 for holding the respective pistons 45 slidably along the radial direction of the hydraulic pump 40, a first end plate and a second end plate supporting the cylinder block 43 to the support part 48 and disposed in front and rear across the cylinder block 43 in the axial direction, and a pair of front and rear bearings 46a for rotatably supporting the cylinder block 43 to the first end plate and the second end plate.

In an illustrative embodiment, the hydraulic pump 40 includes bearings 49a, 49b rotatably supporting the main shaft 2 about the axis in front and rear of the main shaft 2 in the axial direction, and a seal sealing clearance between the main shaft 2 and each of the front and rear end plates. That is, the main shaft 2 is supported inside the nacelle 20 via the pair of bearings 49a, 49b disposed in front and rear in the axial direction, the hydraulic pump 40 having the bearings 49a, 49b, and a support mechanism (e.g. the support part 48) for the hydraulic pump 40.

In the present embodiment, the pump shaft 42c is mounted to be integrally rotatable with the main shaft 2, around the main shaft 2. The main shaft 2 and the pump shaft 42c are coupled in a way that is not particularly limited as long as torques can be transmitted reliably, such as shrink fit and spline coupling.

The stator part 41 of the hydraulic pump 40 is disposed outside the rotor part 47 in the radial direction.

As depicted in FIG. 2, the support part 48 is disposed on the upper portion 21a of the nacelle base plate 21, and to support at least one of the front end portion or the rear end portion of the stator part 41 in the axial direction. In other words, the support part 48 is configured to support the stator part 41 at the front end portion, at the rear end portion, or at both of the front end portion and the rear end portion, in the axial direction.

A plurality of pistons 45 is arranged in a radial fashion on the outer side, in the radial direction, of a ring cam 42. A roller 45a to be in contact with a cam surface of the ring cam 42 is mounted to an end portion of each piston 45. The pistons 45 are configured to be capable of reciprocating along the radial direction of the hydraulic pump 40, being guided by the cylinders 44. When each piston 45 reciprocates in the corresponding cylinder 44, the volume of a working chamber 44a formed by the piston 45 and the cylinder 44 changes cyclically. The mode of motion is converted between such reciprocating motion of the pistons 45 accompanied by the cyclic volume change of the working chambers 44a and the rotational motion of the hydraulic pump 40. Specifically, rotational motion of the ring cam 42 rotating with the pump shaft 42c is converted into reciprocating motion of the pistons 45, so that the cyclic volume change of the working chambers 44a takes place and high-pressure working oil (pressurized oil) is produced in the working chambers 44a.

The ring cam 42 is fixed to the outer periphery of the pump shaft 42c. The ring cam 42 has a cam surface formed in a continuous wavy shape along the circumferential direction of the pump shaft 42c, and is disposed in an annular shape so as to surround the entire periphery of the pump shaft 42c. A plurality of rows of ring cams 42 may be disposed in the axial direction of the pump shaft 42c (hereinafter, merely referred to as the axial direction). The ring cam 42 is not limited to one having a cam surface of a wavy shape, but may have a cam surface of an eccentric cam which has a single cam surface with the center of the ring cam 42 being offset from the center position of the shaft. Further, the ring cam 42 is divided in the circumferential direction of the pump shaft 42c so as to be attachable and detachable in the radial direction of the hydraulic pump 40 (pump shaft 42c) (see FIG. 3). That is, the ring cam 42 includes a plurality of ring cam segments (cam segments) 42a disposed in the circumferential direction. The cam segments 42a are coupled to the pump shaft 42c with bolts 42b, and it is possible to detach the cam segments 42a from the pump shaft 42c, and to take the cam segments 42a outside a casing including the first and second end plates, by removing the bolts 42b. The ring cam 42 including the plurality of ring cam segments 42a may be mounted to the outer periphery of the main shaft 2 between the pair of bearings 49a, 49b in the axial direction. In this case, the ring cam 42 is mounted to the main shaft 2 either directly or indirectly via an additional shaft such as the pump shaft 42c.

The cylinder block 43 is disposed on the outer side of the ring cam 42 with respect to the radial direction and arranged so as to extend in an annular shape over the entire circumference of the pump shaft 42c. Inside the cylinder block 43, formed are cylinders 44, as well as a high-pressure oil channel 54 and a low-pressure oil channel 64 communicating with the working chambers 44a in the cylinders 44. Further, the cylinder block 43 is divided in the circumferential direction of the pump shaft 42c so as to be attachable and detachable in the radial direction of the hydraulic pump 40. That is, the cylinder block 43 includes a plurality of cylinder block segments (segments) 43a disposed in the circumferential direction of the hydraulic pump 40. In this case, for each one of the cylinder block segments 43a, a plurality of sets may be arranged in the axial direction and the circumferential direction of the hydraulic pump 40, each set including a cylinder 44, a high-pressure oil channel 54, and a low-pressure oil channel 64.

As depicted in FIG. 3, a high-pressure valve 52 is disposed in the high-pressure oil channel 54, so that the high-pressure oil channel 54 communicates with the high-pressure oil line 50 (see FIG. 1) as the high-pressure valve 52 opens. High-pressure oil collected in the high-pressure manifold (collecting pipe) 54a from a plurality of high-pressure oil channels 54 may be transferred again to the high-pressure oil line 50 through the cylinder block (see FIG. 1). A low-pressure valve 62 is disposed in the low-pressure oil channel 64, so that the low-pressure oil channel 64 communicates with a low-pressure oil pipe 65 (branch pipe) as the low-pressure valve 62 opens.

Further, in an embodiment, as depicted in FIG. 3, the length of a cylinder block segment 43a in the circumferential direction is longer than the length of a cam segment 42a in the circumferential direction covered with the cylinder block segment 43a. Accordingly, by removing at least one cylinder block segment 43a, it is possible to expose at least one cam segment 42a being covered with the at least one cylinder block segment 43a for the sake of maintenance. Further, by removing the exposed cam segment 42a, it is possible to replace and repair the cam segment 42a readily. Maintenance mentioned herein includes repairing, fixing, replacing, and checking. It will be understood that maintenance can be performed also on the removed cylinder block 43 itself.

In the invention, a pair of bearings 49a, 49b is disposed in front and rear across the center axis B of the yaw rotation bearing 22 in the axial direction of the main shaft 2, while the hydraulic pump 40 is disposed from front to rear across the center axis B of the yaw rotation bearing 22 in the axial direction.

The stator part 41 includes bearing-fixing parts 46, 46 to which a pair of bearings 49a, 49b is mounted, and the cylinder block 43 is disposed to be nipped between the pair of bearing-fixing parts 46, 46.

In some embodiments, the rotor part 47 includes a pair of small-diameter portions 47a, 47a having a pair of bearings 49a, 49b mounted thereto, and a large-diameter portion 47b disposed between the pair of small-diameter portions 47a, 47a in the axial direction, with the ring cam 42 mounted to the large-diameter portion 47b. The large-diameter portion 47b may have a diameter (D2) larger than the diameter (Dl) of the small-diameter portions 47a (D1 < D2).

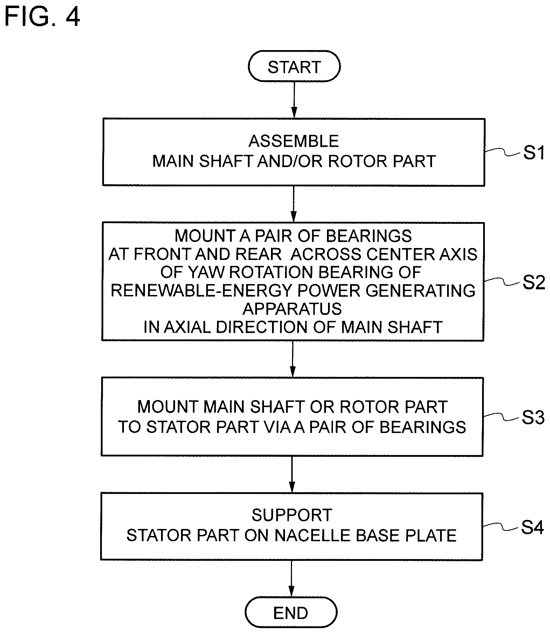

Next, a method of assembling the wind turbine power generating apparatus 1 having the above configuration will be described with reference to FIGs. 2 and 4.

In some embodiments, the main shaft 2 and/or the rotor part 47 is assembled (S1), the pair of bearings 49a, 49b are mounted to front and rear across the center axis B of the yaw rotation bearing 22 of the wind turbine power generating apparatus 1 in the axial direction of the main shaft 2 (S2), the main shaft 2 or the rotor part 47 is mounted to the stator part 41 via the pair of bearings 49a, 49b (S3), and the stator part 41 is supported on the nacelle base plate 21 (S4).

In the embodiment depicted in FIG. 2, the main shaft 2 is assembled as the rotor part 47 of the hydraulic pump 40 in step (S1). Further, in the step of mounting the pair of bearings 49a, 49b (S2), the pair of bearings 49a, 49b may be mounted to the outer peripheral surface 2b of the main shaft 2 on both sides of the main shaft 2 with respect to the axial direction, or the pair of bearings 49a, 49b and the pair of bearing-fixing parts 46, 46 may be mounted from the side of the rear end portion 2c of the main shaft 2.

Further, in step (S2), each segment may be mounted to a position between the pair of bearing-fixing parts 46, 46 in the axial direction to form the cylinder block 43, after mounting the pair of bearings 49a, 49b and the pair of bearing-fixing parts 46, 46 to the main shaft 2.

In the assembling method described with reference to the above embodiment, the order to perform the steps is not limited.

As described above, in some embodiments, at least the hydraulic pump 40 having a large weight is disposed on the center axis B of yaw rotation inside the nacelle 20. Thus, it is unnecessary to position the hydraulic pump 40 behind the center axis B of the yaw rotation bearing 22 in the axial direction of the main shaft 2, which makes it possible to suppress an increase in, or reduce the size of the nacelle 20 in the axial direction, and/or the weight of the nacelle 20. Furthermore, the rotor part 47 of the hydraulic pump 40 may be directly mounted to the main shaft 2, for instance, in case of which it is unnecessary to provide a dedicated rotor bearing for pivotally supporting the rotor part 47 of the hydraulic pump 40. In other words, it is possible to pivotally support the main shaft 2 and the rotor part 47 of the hydraulic pump 40 with the pair of bearings; or the pair of bearings 49a, 49b function as bearings for the main shaft 2 and also as bearings for the rotor part 47 of the hydraulic pump 40; or it is possible to provide common bearings for pivotally supporting the rotor part 47 of the hydraulic pump 40 and for supporting the main shaft 2. Thus, as compared to a typical renewable-energy type power generating apparatus which requires a rotor bearing for the hydraulic pump 40 provided separately from a bearing for the main shaft 2, it is possible to reduce at least a weight corresponding to a rotor bearing, which makes it possible to suppress an increase in the weight of the nacelle 20 or to reduce the weight of the nacelle 20.

Further, in some embodiments, at least one of the front end portion 41a or the rear end portion 41b in the axial direction, of the stator part 41 disposed on the radially outer side of the rotor part 47 is supported by the support part 48. Thus, loads input to the pair of bearings 49a, 49b supporting the main shaft 2 are transmitted to the nacelle 20 or the tower 30 via the stator part 41, the support part 48, the nacelle base plate 21, and the yaw rotation bearing 22. Accordingly, the nacelle 20 or the tower 30 can support the complex loads applied to the pair of bearings 49a, 49a, and thus it is possible to reinforce the pair of bearings 49a, 49b or to reduce loads applied to the pair of bearings 49a, 49b, and to keep the bearings 49a, 49b functional for a long period of time.

Further, in some embodiments, the ring cam 42 mounted to the outer peripheral surface 2b of the main shaft 2 functions as the rotor part 47 of the hydraulic pump 40. Accordingly, the ring cam 42 rotates with the main shaft 2, and the pistons 45 disposed so as to face the ring cam 42 at the radially outer side of the ring cam 42 reciprocate inside the cylinders 44 in accordance with the cam surface of the ring cam 42 and thereby produce pressurized oil.

Further, in some embodiments, the cylinder block 43 is supported so as to be interposed at front and rear of the cylinder block 43, in the axial direction, between the pair of bearing-fixing parts 46, 46 of the stator part 41 at least from front and rear in the axial direction. Thus, it is possible to support the cylinder block 43 suitably at front and rear with respect to the axial direction.

The rotor part 47 has small-diameter portions 47a to which the pair of bearings 49a, 49b are to be mounted, and a large-diameter portion 47b which has a diameter larger than those of the small-diameter portions 47a, and to which the ring cam 42 is to be mounted. Thus, it is possible to reduce the weight related to bearings including the pair of bearings 49a, 49b, and to increase the diameter of the ring cam 42 and of the cylinder block 43 disposed to face the ring cam 42 at the radially outer side of the ring cam 42, which makes it possible to provide a larger number of cylinders 44 in the circumferential direction of the hydraulic pump 40. Accordingly, it is possible to provide a structure suitable to increase a pump output accompanying an improved power generation efficiency, while suppressing a weight increase of the nacelle 20.

Further, in the method of assembling the wind turbine power generating apparatus 1 according to some embodiments, at least the hydraulic pump 40, which is relatively heavy, is disposed on the center axis B of the yaw rotation bearing 22 inside the nacelle 20, and thus it is unnecessary to provide a hydraulic pump behind the center axis of the yaw rotation bearing in the axial direction of the main shaft. Thus, it possible to suppress or reduce an increase in the size of the nacelle 20 in the axial direction, and/or the weight of the nacelle 20.

Furthermore, the rotor part 47 of the hydraulic pump 40 may be directly mounted to the main shaft 2, for instance, in case of which it is unnecessary to provide a dedicated rotor bearing for pivotally supporting the rotor part 47 of the hydraulic pump 40.

Moreover, the main shaft 2 functions as the rotor part 47 of the hydraulic pump 40, and thus it is unnecessary to provide a separate member corresponding to the rotor part, at least for a section of the rotor part 47 of the hydraulic pump 40 where the main shaft 2 functions as a rotor part of the hydraulic pump 40. Thus, it is possible to reduce the corresponding weight, and to reduce the weight of the nacelle 20. Further, it is unnecessary to mount a bearing for the hydraulic pump 40 separately from the pair of bearings 49a, 49b, and thus the assembling performance and maintainability are improved as compared to a typical method of assembling a renewable-energy type power generating apparatus which requires mounting other bearings. Further, it is unnecessary to have the hydraulic pump 40 assembled in advance, which improves the flexibility of assembly to adjust to different situations, and thereby the assembling performance improves.

Further, in some embodiments, the pair of bearings 49a, 49b and the pair of bearing-fixing parts 46 are mounted from the side of the rear end portion 2c of the main shaft 2. Specifically, with regard to the pair of bearings 49a, 49b and the pair of bearing-fixing parts 46, 46, the bearing 49a in front in the axial direction is mounted from the side of the rear end portion 2c of the main shaft toward the front in a position determined by a flange portion 2a, the bearing-fixing part 46 in front in the axial direction is mounted from the rear end side of the main shaft 2 toward the front, the bearing-fixing part 46 in rear in the axial direction is mounted from the side of the rear end portion 2c of the main shaft 2 toward the front, and the bearing 49b in rear in the axial direction is mounted from the side of the rear end portion 2c of the main shaft 2 toward the front.

Further, a plurality of segments 43a to form the cylinder block 43 is mounted to a position between the pair of bearing-fixing parts 46, 46 in the axial direction, after mounting the pair of bearings 49a, 49b and the pair of bearing-fixing parts 46, 46 to the main shaft 2. Thus, it is possible to determine the position of the cylinder block 43 readily when mounting the cylinder block 43. Further, it is possible to mount the cylinder block 43 in a state divided into the plurality of segments 43a, which facilitates the assembly works. Furthermore, for instance, if a crane or the like for transportation is disposed inside the nacelle 20, the segments 43a can be efficiently mounted and disassembly and removal can be also facilitated by setting the size of each segment 43a to a size movable by the crane, and thereby the maintainability improves.

### (Second embodiment)

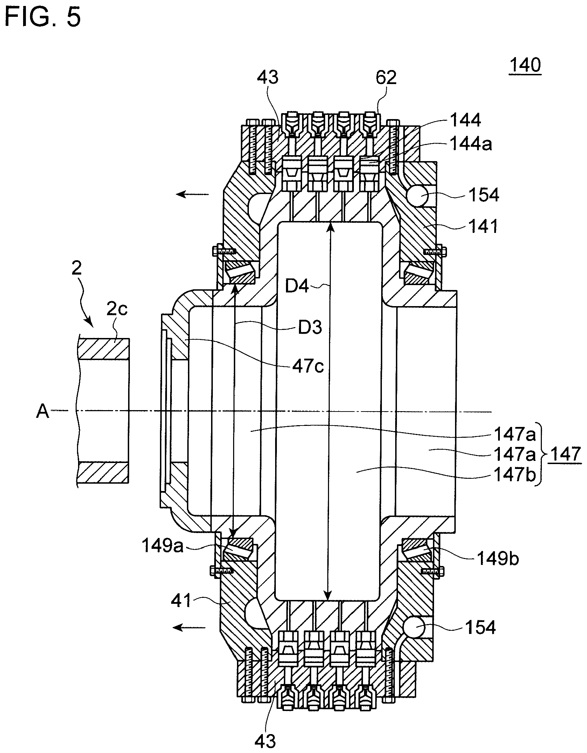

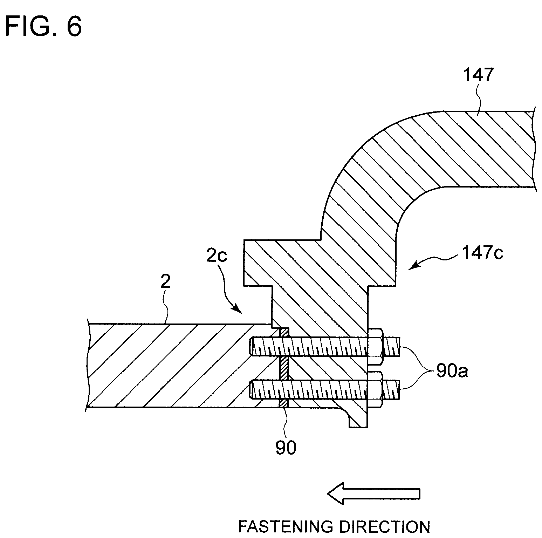

Next, with reference to FIGs. 5 and 6, the second embodiment of a wind turbine power generating apparatus according to an embodiment of the present invention will be described. The same features as those in the first embodiment are indicated by the same reference numerals and not described in detail.

The hydraulic pump 140 in the second embodiment is different from that in the first embodiment in that the hydraulic pump 140 is assembled in advance and then fixed to the main shaft 2.

In some embodiments, the main shaft and the rotor part are coupled by at least one of a flange coupling, a coupling via a coating sheet containing a diamond powder, a key coupling, or a spline coupling. Thus, it is possible to transmit a large torque reliably to a rotor part 147 from the main shaft 2.

### (First working example)

FIGs. 5 and 6 are each a cross-sectional view of a configuration example of a wind turbine power generating apparatus according to the second embodiment.

As depicted in FIG. 5, the hydraulic pump 140 includes a pair of bearings 149a, 149b rotatably supporting the rotor part 147 about an axis at front and rear in the direction of the rotational center axis A of the main shaft 2. The rotor part 147 includes small-diameter portions 147a and a large-diameter portion 147b (D3<D4).

The hydraulic pump 140 includes flange portions in front and rear in the axial direction, and is coupled to the front and rear rotational shafts via flange portions. In the example depicted in FIGs. 5 and 6, a flange portion 47c, which is an inward flange, is connected to the rear end portion 2c of the main shaft 2. Further, as depicted in FIG. 6, the rear end portion 2c of the main shaft 2 and the rotor part 147 may be coupled by providing a shim 90 (e.g. a coating sheet containing a diamond powder or a friction shim) therebetween and fastening with bolts 90a.

In some embodiments, the method of assembling a wind turbine power generating apparatus including the hydraulic pump 140 also includes steps (S1) to (S4) described with reference to the first embodiment.

In some embodiments, step (S2) of assembling the main shaft 2 and/or the rotor part includes coupling the rotor part 147 of the hydraulic pump 140, which is assembled in advance, to the main shaft 2.

Step (S1) of mounting the rotor part 147 to the main shaft 2 includes coupling the rotor part 147 of the hydraulic pump 140, which is assembled in advance, to the rear end portion 2c of the main shaft 2.

Step (S1) of mounting the rotor part 147 to the main shaft 2 includes coupling the main shaft 2 and the rotor part by a flange coupling or a coupling via a coating sheet containing a diamond powder.

As described above, the rotor part 147 of the hydraulic pump 140 assembled in advance is coupled to the main shaft 2, and thus it is possible to assemble the hydraulic pump 140 somewhere other than an installation site before carrying the hydraulic pump 140 into the site. Thus, it is possible to facilitate the assembling works of the renewable-energy type power generating apparatus 1 at the site. The main shaft 2 and the rotor part 147 can be coupled to each other by a variety of methods, which improves the assembling performance and the design flexibility.

Further, the rotor part 147 of the hydraulic pump 140 assembled in advance may be joined to the rear end portion of the main shaft, the rear end portion 2c of the main shaft 2 being joined to the rotor part 147 of the hydraulic pump 140, and supported rotatably to the stator part 141 via a pair of bearings 149a, 149b. Further, the rotor part 147 mounted to the rear end portion 2c of the main shaft 2 is a part of the hydraulic pump 140 disposed on the center axis B of yaw rotation inside the nacelle 20, and thus a smaller space is required at the rear side in the axial direction of the main shaft 2 during assembly and maintenance, which improves the assembling performance and maintainability while suppressing the weight of the nacelle 20.

In the example depicted in FIG. 6, the main shaft 2 and the rotor part 147 are coupled by a flange coupling or a coupling via a coating sheet containing a diamond powder, which makes it possible to transmit a great torque reliably from the main shaft 2 to the rotor part 147.

### (Second working example)

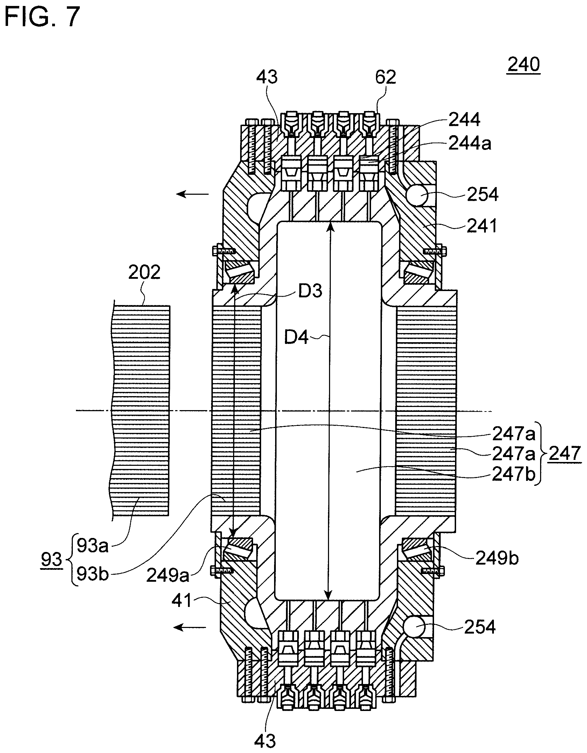

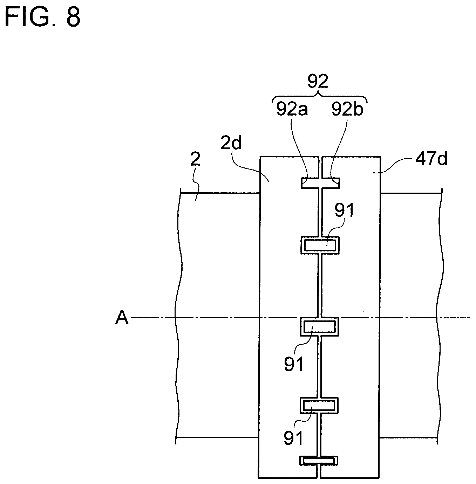

With reference to FIGs. 7 and 8, another example will be described.

In the example depicted in FIG. 7, the hydraulic pump 240 is similar to that in the first working example, in that the hydraulic pump 240 is assembled in advance and then fixed to a main shaft 202. Further, the hydraulic pump 240 has small-diameter portions 247a and a large-diameter portion 247b (D3<D4), similarly to the above example.

In the second working example, splines 93a, 93b are formed on the side of the main shaft 202 and on the side of the rotor part 147, and the rotor part 247 of the hydraulic pump 240 assembled in advance is engaged with the outer peripheral side of the main shaft 202, so that the hydraulic pump 240 is mounted from the rear end side of the main shaft 202 by a spline coupling. While the outer periphery of the main shaft 202 and the inner periphery of the rotor part 247 have a spline in the drawings, the configuration is not limited to this.

The hydraulic pump 240 assembled in advance is mounted from the rear end side of the main shaft 202 so as to engage the rotor part 247 of the hydraulic pump 240 with the outer peripheral side of the main shaft 202. For instance, the rotor part 247 of the hydraulic pump 240 is assembled into an outer cylindrical shape so as to be inserted onto the outer periphery of the main shaft 202, and then slided from the rear end side of the main shaft 202 to be engaged with the main shaft 202.

In the example depicted in FIG. 8, the main shaft 202 and the rotor part 247 are coupled by a key coupling of engaging a key 91 with a key groove 92 including a key groove 92a formed on the flange portion 2d on the rear end side of the main shaft 202 and a key groove 92b formed on the front end side of the rotor part 247, and thus it is possible to transmit a large torque reliably from the main shaft 202 to the rotor part. It will be understood that the number and shape of the key 91 and the key groove 92 are not limited to the illustrated example, and that various modifications are possible.

## Claims

1. A renewable-energy type power generating apparatus (1), comprising:
a wind turbine rotor (10);
a main shaft (2;202) coupled to the wind turbine rotor (10) ;
a hydraulic pump (40;140;240) including a stator part (41), and a rotor part (42c;47;147;247) provided to be rotatable relative to the stator part (41) and configured to rotate along with the main shaft (2;202);
a nacelle (20) housing at least the hydraulic pump (40; 140; 240);
a tower (30) supporting the nacelle (20);
a yaw rotation bearing (22) rotatably supporting a nacelle base plate (21) of the nacelle (20) on the tower (30) ;
a support part (48) supporting the stator part (41) on the nacelle base plate (21); and
a pair of bearings (49a,b;149a,b;249a,b) disposed between the stator part (41) and the main shaft (2;202) or the rotor part (42c;47;147;247), and configured to support the main shaft (2;202) rotatably on the nacelle base plate (21) via the stator part (41) and the support part (48),
wherein the pair of bearings (49a,49b) are disposed in front and rear across a center axis (B) of the yaw rotation bearing (22) in an axial direction of the main shaft (2;202),
wherein the hydraulic pump (40;140;240) is disposed from front to rear across the center axis (B) of the yaw rotation bearing (22) in the axial direction, and
wherein the pair of bearings (49a,b;149a,b;249a,b) are arranged to function as bearings for the main shaft (2;202) and as bearings for the rotor part (42c;47;147;247) of the hydraulic pump (40;140;240).

2. The renewable-energy type power generating apparatus (1) according to claim 1,
wherein the stator part (41) is disposed on a radially outer side of the rotor part (42c;47;147;247), and
wherein the support part (48) is disposed above the nacelle base plate (21), and is configured to support at least one of a front end portion (41a) or a rear end portion (41b) of the stator part (41) in the axial direction.

3. The renewable-energy type power generating apparatus (1) according to claim 1 or 2,
wherein the rotor part (42c;47;147;247) includes a ring cam (42) to be mounted to an outer peripheral surface of the main shaft (2;202) between the pair of bearings (49a,b;149a,b;249a,b) in the axial direction, and
wherein the stator part (41) includes:
a cylinder block (43) disposed on a radially outer side of the ring cam (42) so as to face the ring cam (42); and
a piston (45) configured to reciprocate, by the ring cam (42), inside a cylinder (44) formed in the cylinder block (43).

4. The renewable-energy type power generating apparatus (1) according to claim 3,
wherein the stator part (41) includes a pair of bearing-fixing parts (46) to which the pair of bearings (49a,b) are to be mounted respectively, and
wherein the cylinder block (43) is disposed so as to be interposed between the pair of bearing-fixing parts (46) in the axial direction.

5. The renewable-energy type power generating apparatus (1) according to claim 3 or 4,
wherein the rotor part (42c;47;147;247) includes:
a pair of small-diameter portions (47a;147a;247a) to which the pair of bearings (49a,b;149a,b;249a,b) are mounted; and
a large-diameter portion (47b;147b;247b) which is disposed between the pair of small-diameter portions (47a;147a;247a) in the axial direction, and to which the ring cam (42) is mounted.

6. The renewable-energy type power generating apparatus (1) according to any one of claims 1 to 5,
wherein the main shaft (2;202) and the rotor part (42c;47;147;247) are coupled by at least one of: a flange coupling; a coupling via a coating sheet containing a diamond powder; a key coupling; or a spline coupling.

7. A method of assembling a renewable-energy type power generating apparatus (1) comprising:
a wind turbine rotor (10);
a main shaft (2;202) coupled to the wind turbine rotor (10);
a hydraulic pump (40;140;240) including a stator part (41), and a rotor part (42c;47;147;247) provided to be rotatable relative to the stator part (41) and configured to rotate along with the main shaft (2;202);
a nacelle (20) housing at least the hydraulic pump (40;140;240);
a tower (30) supporting the nacelle (20);
a yaw rotation bearing (22) rotatably supporting a nacelle base plate (21) of the nacelle (20) on the tower (30);
the method comprising:
a step of assembling the main shaft (2;202) and/or the rotor part (42c;47;147;247);
a step of mounting a pair of bearings (49a,b;149a,b;249a,b) in front and rear across a center axis (B) of the yaw rotation bearing (22) of the renewable-energy type power generating apparatus (1) in an axial direction of the main shaft (2;202);
a step of mounting the main shaft (2;202) or the rotor part (42c;47;147;247) to the stator part (41) via the pair of bearings (49a,b;149a,b;249a,b); and
a step of supporting the nacelle base plate (21) on the stator part (41),
wherein the hydraulic pump (40;140;240) is disposed from front to rear across the center axis (b) of the yaw rotation bearing (22) in the axial direction, and
wherein the pair of bearings (49a,b;149a,b;249a,b) are arranged to function as bearings for the main shaft (2;202) and as bearings for the rotor part (42c;47;147;247) of the hydraulic pump (40;140;240).

8. The method of assembling a renewable-energy type power generating apparatus (1) according to claim 7,
wherein the step of assembling the main shaft (2;202) includes assembling the main shaft (2;202) as a rotor of the hydraulic pump (40;140;240), and
wherein the step of mounting the pair of bearings (49a,b;149a,b;249a,b) includes mounting the pair of bearings (49a,b;149a,b;249a,b) to an outer peripheral surface of the main shaft (2;202) at both sides of the main shaft (2;202) in the axial direction.

9. The method of assembling a renewable-energy type power generating apparatus (1) according to claim 7 or 8,
wherein the stator part (41) includes a pair of bearing-fixing parts (46) to which the pair of bearings (49a,b) are to be mounted, respectively, and
wherein the pair of bearings (49a,b) and the pair of bearing-fixing parts (46) are mounted from a rear end side of the main shaft (2).

10. The method of assembling a renewable-energy type power generating apparatus (1) according to claim 9,
wherein the stator part (41) includes a cylinder block (43) comprising a plurality of segments (43a) disposed in a circumferential direction of the hydraulic pump (40), and
wherein the method further comprises forming the cylinder block (43) by mounting each of the plurality of segments (43a) to a position between the pair of bearing-fixing parts (46) in the axial direction after mounting the pair of bearings (49a,b) and the pair of bearing-fixing parts (46) to the main shaft (2).

11. The method of assembling a renewable-energy type power generating apparatus (1) according to claim 7,
wherein the step of assembling the main shaft (2;202) and/or the rotor part (147;247) includes coupling the rotor part (147;247) of the hydraulic pump (140;240) to the main shaft (2;202), the hydraulic pump (140;240) being assembled in advance.

12. The method of assembling a renewable-energy type power generating apparatus (1) according to claim 11,
wherein the step of assembling the main shaft (2;202) and/or the rotor part (147;247) includes coupling the rotor part (147;247) of the hydraulic pump (140;240) to a rear end portion (2c) of the main shaft (2;202), the hydraulic pump (140;240) being assembled in advance.

13. The method of assembling a renewable-energy type power generating apparatus (1) according to any one of claims 7, 11, 12,
wherein the step of assembling the main shaft (2) and/or the rotor part (147) includes coupling the main shaft (2) and the rotor part (147) by a flange coupling or a coupling via a coating sheet containing a diamond powder.

14. The method of assembling a renewable-energy type power generating apparatus (1) according to claim 11,
wherein the step of assembling the main shaft (2;202) and/or the rotor part (147;247) includes mounting the hydraulic pump (140;240) from a rear end side of the main shaft (2;202) so as to engage the rotor part (147;247) of the hydraulic pump (140;240) with an outer peripheral side of the main shaft (2;202), the hydraulic pump (140;240) being assembled in advance.

15. The method of assembling a renewable-energy type power generating apparatus (1) according to any one of claims 7, 11, and 14,
wherein the step of assembling the main shaft (202) and/or the rotor part (247) includes coupling the main shaft (202) and the rotor part (247) by a key coupling or a spline coupling.

## Patentansprüche

1. Eine Vorrichtung zur Stromerzeugung aus erneuerbarer Energie (1) mit:
einem Windturbinenrotor (10),
einer Hauptwelle (2;202), die mit dem Windturbinenrotor (10) gekoppelt ist,
einer Hydraulikpumpe (40;140;240) mit einem Statorteil (41) und einem Rotorteil (42c;47;147;247), das relativ zu dem Statorteil (41) drehbar vorgesehen ist und konfiguriert ist, um zusammen mit der Hauptwelle (2;202) zu rotieren,
einer Nazelle (20), die zumindest die Hydraulikpumpe (40;140;240) aufnimmt,
einem Turm (30), der die Nazelle (20) trägt,
einem Gier-Rotationslager (22), das eine Nazelle-Basisplatte (21) der Nazelle (20) an dem Turm (30) drehbar trägt,
einem Tragteil (48), dass das Statorteil (41) an bzw. auf der Nazelle-Basisplatte (21) trägt, und
einem Paar von Lagern (49a,b;149a,b;249a,b), die zwischen dem Statorteil (41) und der Hauptwelle (2;202) oder dem Rotorteil (42c;47;147;247) angeordnet sind und konfiguriert sind, um die Hauptwelle (2;202) drehbar an bzw. auf der Nazelle-Basisplatte (21) über das Statorteil (41) und das Tragteil (48) zu tragen,
wobei das Paar von Lagern (49a,49b) vor und hinter einer Mittelachse (B) des Gier-Rotationslagers (22) in einer Axialrichtung der Hauptwelle (2;202) angeordnet sind,
wobei die Hydraulikpumpe (40;140;240) von der Vorderseite zur Rückseite über der Mittelachse (B) des Gier-Rotationslagers (22) in der Axialrichtung angeordnet ist, und
wobei das Paar von Lagern (49a,b;149a,b;249a,b) angeordnet sind, um als Lager für die Hauptwelle (2;202) und als Lager für das Rotorteil (42c;47;147;247) der Hydraulikpumpe (40;140;240) zu wirken.

2. Die Vorrichtung zur Stromerzeugung aus erneuerbarer Energie (1) gemäß Anspruch 1,
wobei das Statorteil (41) an einer radial äußeren Seite des Rotorteils (42c;47;147;247) angeordnet ist, und
wobei das Tragteil (48) über der Nazelle-Basisplatte (21) angeordnet ist und konfiguriert ist, um zumindest einen von einem vorderen Endabschnitt (41a) oder einem hinteren Endabschnitt (41b) des Statorteils (41) in der Axialrichtung zu tragen.

3. Die Vorrichtung zur Stromerzeugung aus erneuerbarer Energie (1) gemäß Anspruch 1 oder 2,
wobei das Rotorteil (42c;47;147;247) einen Ringnocken (42) aufweist, der an einer Außenumfangsoberfläche der Hauptwelle (2;202) zwischen dem Paar von Lagern (49a,b;149a,b;249a,b) in der Axialrichtung anzubringen ist, und
wobei das Statorteil (41) aufweist:
einen Zylinderblock (43), der an einer radial äußeren Seite des Ringnockens (42) so angeordnet ist, dass er dem Ringnocken (42) zugewandt ist, und
einen Kolben (45), der konfiguriert ist, um durch den Ringnocken (42) im Inneren eines Zylinders (44), der in dem Zylinderblock (43) ausgebildet ist, hin-und-her bewegt zu werden.

4. Die Vorrichtung zur Stromerzeugung aus erneuerbarer Energie (1) gemäß Anspruch 3,
wobei das Statorteil (41) ein Paar von Lager-Befestigungsteilen (46) aufweist, an denen das Paar von Lagern (49a,b) jeweils anzubringen sind, und
wobei der Zylinderblock (43) so angeordnet ist, dass er zwischen dem Paar von Lager-Befestigungsteilen (46) in der Axialrichtung eingefügt ist.

5. Die Vorrichtung zur Stromerzeugung aus erneuerbarer Energie (1) gemäß Anspruch 3 oder 4,
wobei das Rotorteil (42c;47;147;247) aufweist:
ein Paar von Abschnitten mit kleinem Durchmesser (47a;147a;247a), an denen das Paar von Lagern (49a,b;149a,b;249a,b) angebracht sind, und
einen Abschnitt mit großem Durchmesser (47b;147b;247b), der zwischen dem Paar von Abschnitten mit kleinem Durchmesser (47a;147a;247a) in der Axialrichtung angeordnet ist und an dem der Ringnocken (42) angebracht ist.

6. Die Vorrichtung zur Stromerzeugung aus erneuerbarer Energie (1) gemäß einem der Ansprüche 1 bis 5,
wobei die Hauptwelle (2;202) und das Rotorteil (42c;47;147;247) durch zumindest eines der folgenden gekoppelt sind: eine Flanschkupplung, eine Kupplung über eine Beschichtungslage, die ein Diamantpulver enthält, eine Passform-Kupplung oder eine Spline- bzw. Keilkupplung.

7. Ein Verfahren zum Zusammenbauen einer Vorrichtung zur Stromerzeugung aus erneuerbarer Energie (1) mit:
einem Windturbinenrotor (10),
einer Hauptwelle (2;202), die mit dem Windturbinenrotor (10) gekoppelt ist,
einer Hydraulikpumpe (40;140;240) mit einem Statorteil (41) und einem Rotorteil (42c;47;147;247), das relativ zu dem Statorteil (41) drehbar vorgesehen ist und konfiguriert ist, um zusammen mit der Hauptwelle (2;202) zu rotieren,
einer Nazelle (20), die zumindest die Hydraulikpumpe (40;140;240) aufnimmt,
einem Turm (30), der die Nazelle (20) trägt,
einem Gier-Rotationslager (22), das eine Nazelle-Basisplatte (21) der Nazelle (20) an dem Turm (30) drehbar trägt,
wobei das Verfahren aufweist:
einen Schritt des Einbauens der Hauptwelle (2;202) und/oder des Rotorteils (42c;47;147;247),
einen Schritt des Anbringens eines Paars von Lagern (49a,b;149a,b;249a,b) vor und hinter einer Mittelachse (B) des Gier-Rotationslagers (22) der Vorrichtung zur Stromerzeugung aus erneuerbarer Energie (1) in einer Axialrichtung der Hauptwelle (2;202),
einen Schritt des Anbringens der Hauptwelle (2;202) oder des Rotorteils (42c;47;147;247) an dem Statorteil (41) über das Paar von Lagern (49a,b;149a,b;249a,b), und
einen Schritt des Lagerns der Nazelle-Basisplatte (21) an bzw. auf dem Statorteil (41),
wobei die Hydraulikpumpe (40;140;240) von der Vorderseite zur Rückseite über der Mittelachse (b) des Gier-Rotationslagers (22) in der Axialrichtung angeordnet ist bzw. wird, und
wobei das Paar von Lagern (49a,b;149a,b;249a,b) angeordnet sind bzw. werden, um als Lager für die Hauptwelle (2;202) und als Lager für das Rotorteil (42c;47;147;247) der Hydraulikpumpe (40;140;240) zu wirken.

8. Das Verfahren zum Zusammenbauen einer Vorrichtung zur Stromerzeugung aus erneuerbarer Energie (1) gemäß Anspruch 7,
wobei der Schritt des Einbauens der Hauptwelle (2;202) ein Einbauen der Hauptwelle (2;202) als Rotor der Hydraulikpumpe (40;140;240) aufweist, und
wobei der Schritt des Anbringens des Paars von Lagern (49a,b;149a,b;249a,b) ein Anbringen des Paars von Lagern (49a,b;149a,b;249a,b) an einer Außenumfangsoberfläche der Hauptwelle (2;202) an beiden Seiten der Hauptwelle (2;202) in der Axialrichtung aufweist.

9. Das Verfahren zum Zusammenbauen einer Vorrichtung zur Stromerzeugung aus erneuerbarer Energie (1) gemäß Anspruch 7 oder 8,
wobei das Statorteil (41) ein Paar von Lager-Befestigungsteilen (46) aufweist, an denen das Paar von Lagern (49a,b) jeweils anzubringen sind, und
wobei das Paar von Lagern (49a,b) und das Paar von Lager-Befestigungsteilen (46) von einer hinteren Endseite der Hauptwelle (2) angebracht werden.

10. Das Verfahren zum Zusammenbauen einer Vorrichtung zur Stromerzeugung aus erneuerbarer Energie (1) gemäß Anspruch 9,
wobei das Statorteil (41) einen Zylinderblock (43) mit einer Vielzahl von Segmenten (43a) aufweist, die in einer Umfangsrichtung der Hydraulikpumpe (40) angeordnet sind, und
wobei das Verfahren ferner ein Ausbilden des Zylinderblocks (43) durch Anbringen von jedem der Vielzahl von Segmenten (43a) an einer Position zwischen dem Paar von Lager-Befestigungsteilen (46) in der Axialrichtung nach dem Anbringen des Paars von Lagern (49a,b) und des Paars von Lager-Befestigungsteilen (46) an der Hauptwelle (2) aufweist.

11. Das Verfahren zum Zusammenbauen einer Vorrichtung zur Stromerzeugung aus erneuerbarer Energie (1) gemäß Anspruch 7,
wobei der Schritt des Einbauens der Hauptwelle (2;202) und/oder des Rotorteils (147;247) ein Koppeln des Rotorteils (147;247) der Hydraulikpumpe (140;240) mit der Hauptwelle (2;202) aufweist, wobei die Hydraulikpumpe (140;240) vorab zusammengebaut ist bzw. wird.

12. Das Verfahren zum Zusammenbauen einer Vorrichtung zur Stromerzeugung aus erneuerbarer Energie (1) gemäß Anspruch 11,
wobei der Schritt des Einbauens der Hauptwelle (2;202) und/oder des Rotorteils (147;247) ein Koppeln des Rotorteils (147;247) der Hydraulikpumpe (140;240) mit einem hinteren Endabschnitt (2c) der Hauptwelle (2;202) aufweist, wobei die Hydraulikpumpe (140;240) vorab zusammenbaut ist bzw. wird.

13. Das Verfahren zum Zusammenbauen einer Vorrichtung zur Stromerzeugung aus erneuerbarer Energie (1) gemäß einem der Ansprüche 7, 11, 12
Wobei der Schritt des Einbauens der Hauptwelle (2) und/oder des Rotorteils (147) ein Koppeln der Hauptwelle (2) und des Rotorteils (147) durch eine Flanschkupplung oder eine Kupplung über eine Beschichtungslage, die Diamantpulver enthält, aufweist.

14. Das Verfahren zum Zusammenbauen einer Vorrichtung zur Stromerzeugung aus erneuerbarer Energie (1) gemäß Anspruch 11,
wobei der Schritt des Einbauens der Hauptwelle (2;202) und/oder des Rotorteils (147;247) ein Anbringen der Hydraulikpumpe (140;240) von einer hinteren Endseite der Hauptwelle (2;202) so aufweist, dass das Rotorteil (147;247) der Hydraulikpumpe (140;240) mit einer Außenumfangsseite der Hauptwelle (2;202) in Eingriff gebracht wird, wobei die Hydraulikpumpe (140;240) vorab zusammengebaut ist bzw. wird.

15. Das Verfahren zum Zusammenbauen einer Vorrichtung zur Stromerzeugung aus erneuerbarer Energie (1) gemäß einem der Ansprüche 7, 11, und 14,
wobei der Schritt des Einbauens der Hauptwelle (202) und/oder des Rotorteils (247) ein Koppeln der Hauptwelle (202) und des Rotorteils (247) durch eine Passformkupplung oder eine Spline- bzw. Keilkupplung aufweist.

## Revendications

1. Dispositif (1) de production de puissance du type à énergie renouvelable comportant :
un rotor (10) de turbine à vent ;
un arbre (2; 202) principal couplé au rotor (10) de turbine à vent ;
une pompe (40; 140; 240) hydraulique incluant une partie (41) de stator et une partie (42c; 47; 147; 247) de rotor disposée de manière à être rotative par rapport à la partie (41) de stator et configurée pour être solidaire en rotation de l'arbre (2; 202) principal ;
une nacelle (20) recevant au moins la pompe (40; 140; 240) hydraulique ;
une tour (30) supportant la nacelle (20) ;
un palier (22) de rotation de lacet supportant de manière rotative une plaque (21) de base de nacelle de la nacelle (20) sur la tour (30) ;
une partie (48) de support supportant la partie (41) de stator sur la plaque (21) de base de nacelle ; et
une paire de paliers (49a, b; 149a, b; 249a, b) disposés entre la partie (41) de stator et l'arbre (2; 202) principal ou la partie (42c; 47; 147; 247) de rotor, et configurés pour supporter l'arbre (2; 202) principal de manière rotative sur la plaque (21) de base de nacelle par l'intermédiaire de la partie (41) de stator et de la partie (48) de support,
dans lequel la paire de paliers (49a, 49b) sont disposés à l'avant et à l'arrière de part et d'autre d'un axe (B) central du palier (22) de rotation de lacet suivant une direction axiale de l'arbre (2; 202) principal,
dans lequel la pompe (40; 140; 240) hydraulique est disposée de l'avant vers l'arrière de part et d'autre de l'axe (B) central du palier (22) de rotation de lacet dans la direction axiale, et
dans lequel la paire de paliers (49a, b; 149a, b; 249a, b) sont agencés pour fonctionner en tant que paliers pour l'arbre (2; 202) principal et en tant que paliers pour la partie (42c; 47; 147; 247) de rotor de la pompe (40; 140; 240) hydraulique.

2. Dispositif (1) de production de puissance du type à énergie renouvelable suivant la revendication 1,
dans lequel la partie (41) de stator est disposée sur un côté radialement à l'extérieur de la partie (42; 47; 147; 247) de rotor, et
dans lequel la partie (48) de support est disposée au-dessus de la plaque (21) de base de nacelle, et est configurée pour supporter au moins l'une d'une partie (41a) d'extrémité avant ou d'une partie (41b) d'extrémité arrière de la partie (41) de stator suivant la direction axiale.

3. Dispositif (1) de production de puissance du type à énergie renouvelable suivant la revendication 1 ou 2,
dans lequel la partie (42c; 47; 147; 247) de rotor comporte une came (42) annulaire à monter sur une surface périphérique extérieure de l'arbre (2; 202) principal entre la paire de paliers (49a, b; 149a, b; 249a, b) dans la direction axiale, et
dans lequel la partie (41) de stator comporte :
un bloc (43) cylindre disposé sur un côté radialement à l'extérieur de la came (42) annulaire de manière à faire face à la came (42) annulaire ; et
un piston (45) configuré pour effectuer un mouvement de va-et-vient, au niveau de la came (42) annulaire, à l'intérieur d'un cylindre (44) formé dans le bloc (43) cylindre.

4. Dispositif (1) de production de puissance du type à énergie renouvelable suivant la revendication 3,
dans lequel la partie (41) de stator comporte une paire de parties (46) de fixation de palier auxquelles la paire de paliers doivent être fixés respectivement, et
dans lequel le bloc (43) cylindre est disposé de manière à être interposé entre la paire de parties (46) de fixation de palier dans la direction axiale.

5. Dispositif (1) de production de puissance du type à énergie renouvelable suivant la revendication 3 ou 4,
dans lequel la partie (42c; 47; 147; 247) de rotor comporte :
une paire de parties (47a; 147a; 247a) de petit diamètre auxquelles la paire de paliers (49a, b; 149a, b; 249a, b) sont fixés et
une partie (47b; 147b; 247b) de grand diamètre qui est disposée entre la paire de parties (47a; 147a; 247a) de petit diamètre dans la direction axiale, et à laquelle est fixée la came (42) annulaire.

6. Dispositif (1) de production de puissance du type à énergie renouvelable suivant l'une quelconque des revendications 1 à 5,
dans lequel l'arbre (2; 202) principal et la partie (42c; 47; 147; 247) de rotor sont couplés par au moins l'un de : un couplage à rebord ; un couplage par l'intermédiaire d'une feuille de revêtement contenant une poudre de diamant ; un couplage à clavette ou un couplage à cannelure.

7. Procédé d'assemblage d'un dispositif (1) de production de puissance de type à énergie renouvelable comportant :
un rotor (10) de turbine à vent ;
un arbre (2; 202) principal couplé au rotor (10) de turbine à vent ;
une pompe (40; 140; 240) hydraulique incluant une partie (41) de stator et une partie (42c; 47; 147; 247) de rotor disposée de manière à être rotative par rapport à la partie (41) de stator et configurée pour être solidaire en rotation de l'arbre (2; 202) principal ;
une nacelle (20) recevant au moins la pompe (40; 140; 240) hydraulique ;
une tour (30) supportant la nacelle (20) ;
un palier (22) de rotation de lacet supportant de manière rotative une plaque (21) de base de nacelle de la nacelle (20) sur la tour (30) ;
le procédé comprenant :
un stade d'assemblage de l'arbre (2; 202) principal et/ou de la partie (42c; 47; 147; 247) de rotor ;
un stade de montage d'une paire de paliers (49a, b; 149a, b; 249a, b) à l'avant et à l'arrière de part et d'autre d'un axe (B) central du palier (22) de rotation de lacet du dispositif (1) de production de puissance de type à énergie renouvelable dans une direction axiale de l'arbre (2; 202) principal ;
un stade de montage de l'arbre (2; 202) principal ou de la partie (42c; 47; 147; 247) de rotor sur la partie (41) de stator par l'intermédiaire de la paire de paliers (49a, b; 149a, b; 249a, b) ; et
un stade de support de la plaque (21) de base de nacelle sur la partie (41) de stator,
dans lequel la pompe (40; 140; 240) hydraulique est disposée de l'avant vers l'arrière de part et d'autre de l'axe (b) central du palier (22) de rotation de lacet dans la direction axiale, et
dans lequel la paire de paliers (49a, b; 149a, b; 249a, b) sont agencés pour fonctionner en tant que paliers pour l'arbre (2; 202) principal et en tant que paliers pour la partie (42c; 47; 147; 247) de rotor de la pompe (40; 140; 240) hydraulique.

8. Procédé d'assemblage d'un dispositif (1) de production de puissance de type à énergie renouvelable suivant la revendication 7,
dans lequel le stade d'assemblage de l'arbre (2; 202) principal comporte l'assemblage de l'arbre (2; 202) principal en tant qu'un rotor de la pompe (40; 140; 240) hydraulique, et
dans lequel le stade de montage de la paire de paliers (49a, b; 149a, b; 249a, b) inclut le montage de la paire de paliers (49a, b; 149a, b; 249a, b) sur une surface périphérique extérieure de l'arbre (2; 202) principal des deux côtés de l'arbre (2; 202) principal dans la direction axiale.

9. Procédé d'assemblage d'un dispositif (1) de production de puissance de type à énergie renouvelable suivant la revendication 7 ou 8,
dans lequel la partie (41) de stator comporte une paire de parties (46) de fixation de palier auxquelles la paire de paliers (49a, b) doivent être fixés respectivement, et
dans lequel la paire de paliers (49a, b) et la paire de parties (46) de fixation de palier sont montées à partir d'un côté d'extrémité arrière de l'arbre (2) principal.

10. Procédé d'assemblage d'un dispositif (1) de production de puissance de type à énergie renouvelable suivant la revendication 9,
dans lequel la partie (41) de stator comporte un bloc (43) cylindre comportant une pluralité de segments (43a) disposés suivant une direction circonférentielle de la pompe (40) hydraulique, et
dans lequel le procédé comporte en outre le stade de formation du bloc (43) cylindre en montant chacun des segments de la pluralité des segments (43a) dans une position entre la paire de parties (46) de fixation de palier dans la direction axiale après montage de la paire de paliers (49a, b) et de la paire de parties (46) de fixation de palier à l'arbre (2) principal.

11. Procédé d'assemblage d'un dispositif (1) de production de puissance de type à énergie renouvelable suivant la revendication 7,
dans lequel le stade d'assemblage de l'arbre (2; 202) principal et/ou de la partie (147; 247) de rotor comporte le couplage de la partie (147; 247) de rotor de la pompe (140; 240) hydraulique à l'arbre (2; 202) principal, la pompe (140; 240) hydraulique étant assemblée à l'avance.

12. Procédé d'assemblage d'un dispositif (1) de production de puissance de type à énergie renouvelable suivant la revendication 11,
dans lequel le stade d'assemblage de l'arbre (2; 202) principal et/ou de la partie (147; 247) de rotor comporte le couplage de la partie (147; 247) de rotor de la pompe (140; 240) hydraulique à une partie (2c) d'extrémité arrière de l'arbre (2; 202) principal, la pompe (140; 240) étant assemblée à l'avance.

13. Procédé d'assemblage d'un dispositif (1) de production de puissance de type à énergie renouvelable suivant l'une quelconque des revendications 7, 11, 12,
dans lequel le stade d'assemblage de l'arbre (2) principal et/ou de la partie (147) de rotor comporte le couplage de l'arbre (2) principal et de la partie (147) de rotor par un couplage à rebord ou un couplage par l'intermédiaire d'une feuille de revêtement contenant une poudre de diamant.

14. Procédé d'assemblage d'un dispositif (1) de production de puissance de type à énergie renouvelable suivant la revendication 11,
dans lequel le stade d'assemblage de l'arbre (2; 202) principal et/ou de la partie (147; 247) de rotor comporte le montage de la pompe (140; 240) hydraulique à partir d'un côté d'extrémité arrière de l'arbre (2; 202) principal de manière à faire coopérer la partie (147; 247) de rotor de la pompe (140; 240) hydraulique avec un côté périphérique extérieur de l'arbre (2; 202) principal, la pompe (140; 240) hydraulique étant assemblée à l'avance.

15. Procédé d'assemblage d'un dispositif (1) de production de puissance de type à énergie renouvelable suivant l'une quelconque des revendications 7, 11 et 14,
dans lequel le stade d'assemblage de l'arbre (202) principal et/ou la partie (247) de rotor comporte le couplage de l'arbre (202) principal et de la partie (247) de rotor par un couplage à clavette ou un couplage à cannelure.
